# EUROPÄISCHE PATENTSCHRIFT

(11) **EP 2 073 089 B1**
(45) Veröffentlichungstag und Bekanntmachung des Hinweises auf die Patenterteilung: **15.09.2010**
(21) Anmeldenummer: 08020255.9
(22) Anmeldetag: 20.11.2008
(51) Int. Cl.: G05D 16/16

(54) **Pneumatischer Verstärker und Anordnung zum Stellen einer Stellarmartur einer verfahrenstechnischen Anlage**
Pneumatic amplifier and arrangement to drive a actuator in a process facility
Amplificateur pneumatique et agencement destiné au positionnement d'un actionneur dans une installation de contrôle-process

(30) Priorität: 21.12.2007 DE 102007062207
(43) Veröffentlichungstag der Anmeldung: 24.06.2009
(73) Patentinhaber: Samson AG, 60314 Frankfurt (DE)
(72) Erfinder: Kolbenschlag, Stefan, 64291 Darmstadt (DE)
(74) Vertreter: Schmid, Nils T.F.

(56) Entgegenhaltungen:
- EP-A- 0 503 894
- DE-A1- 2 116 197
- DE-A1- 3 741 364
- DE-C1- 19 506 469
- GB-A- 1 256 384
- GB-A- 2 064 168
- US-A1- 2008 099 069
- US-B1- 6 418 956

## Beschreibung

Die Erfindung betrifft einen pneumatischen Verstärker der gattungsbestimmend ein Zuluftventil und ein Abluftventil aufweisen soll. Das Zuluftventil ist mit einer pneumatischen Versorgung verbunden, die beispielsweise einen Versorgungsdruck von 6 bar liefert. Der pneumatische Verstärker empfängt über eine pneumatische Verbindung ein pneumatisches Eingangssteuersignal, das beispielsweise durch einen elektropneumatischen Umformer erzeugt wird. Der elektropneumatische Umformer kann beispielsweise eine Düsen-Prallplatten-Anordnung oder ein modulierendes Schaltelement sein, welches pulsweitenmoduliert (PWM: "Pulse Width Modulation") angesteuert wird. Typischerweise werden derartige elektropneumatische Umformer magnetisch oder von einem piezoelektrisches Bauteil bewegt.

Der Verstärker dient dazu die Luftströme zum Be- und Entlüften eines Volumens zu vergrößern. Der Verstärkungsgrad hängt von der Versorgungspneumatik und dem Ventilaufbau des Zuluft- bzw. des Abluftventils ab. Bekanntermaßen kann das Zuluftventil aufgrund dessen beweglichen Ventilglieds eine pneumatische Verbindung zwischen dem Signaleingang und dem Signalausgang des pneumatischen Verstärkers kontinuierlich öffnen oder unterbrechen. Des weiteren hat das Zuluftventil eine an dessen Ventilglied kraft- oder formschlüssig gekoppelte Membran. Die Membran wird auf ihrer dem Signaleingang des Verstärkers zugewandten Außenseite dem pneumatischen Eingangssteuersignaldruck des elektropneumatischen Umformers ausgesetzt.

Das Abluftventil ist mit einem Entlüftungsausgang zum Entlüften des pneumatischen Verstärkers veraschen. Das Abluftventil hat üblicherweise ein Ventilglied zum kontinuierlichen Öffnen und/oder Unterbrechen einer pneumatischen Verbindung zwischen dem Signalausgang des Zuluftventils bzw. dem Volumen dessen Druck zu regeln ist und dem Entlüftungsausgang.

Zur Erläuterung der Funktionsweise eines herkömmlichen pneumatischen Verstärkers wird auf die beiliegenden Figuren A und B verwiesen, die Querschnittsprinzipskizzen des Verstärkers in zwei Zuständen wiedergeben. Figur A stellt einen Belüftungszustand des bekannten pneumatischen Verstärkers dar, und Figur B zeigt den Entlüftungszustand des pneumatischen Verstärkers.

Der pneumatische Leistungsverstärker **a** hat einen pneumatischen Versorgungseingang **b,** an dem der Versorgungsdruck **P_{V}** anliegt. Des weiteren hat der pneumatische Verstärker **a** einen Entlüftungsausgang **c,** der auf Atmosphärendruck **Pₐₜₘ** liegt. Zudem hat der pneumatische Verstärker **a** einen Steuersignaleingang **d,** über den das pneumatische Eingangssignal P_{S} von einer elektropneumatischen Steuereinheit (nicht dargestellt) empfangen wird. Schließlich hat der pneumatische Verstärker einen Steuersignalausgang **z.**

Ein Gehäuse des pneumatischen Verstärkers **a** ist in eine Versorgungskammer **e,** in die der Versorgungseingang **b** mündet, eine Arbeitskammer **f,** der der Steuersignalausgang **z** zugeordnet ist, eine Entlüftungskammer **g** mit dem Entlüftungsausgang **c** und eine Steuerkammer **h** mit dem Steuersignaleingang **d** unterteilt. In einer Trennwand zwischen der Versorgungskammer e und dem Arbeitsteil **f** ist eine Öffnung **i** ausgebildet, die einen Ventilsitz für ein erstes kegelförmiges Zuluftventilglied **k** definiert. Zwischen der Arbeitskammer **f** und der Entlüftungskammer **g** ist eine bewegliche erste Membranwand **l** realisiert, die eine Entlüftungsöffnung **t** aufweist, die einen Ventilsitz für ein Abluftventilglied **n** definiert. Die Entlüftungskammer **g** ist von der Steuerkammer **h** durch eine zweite bewegliche Membranwand **o** getrennt, die federvorgespannt ist. Zwischen der Steuerkammer **h** und der Arbeitskammer **f** ist eine Bypass-Leitung **q** vorgesehen, welche von einem Drosselstift **r** kontinuierlich geöffnet oder geschlossen werden kann. Auf diese Weise kann das Regelverhalten des Verstärkers insbesondere des Umschaltbetriebs zwischen Entlüftung und Belüftung optimiert werden, indem eine Bypass-Strömung **m_{d}** von der Steuerkammer **h** in die Arbeitskammer **f** eingestellt wird.

Beim Belüftungsvorgang (Fig. A) empfängt der pneumatische Verstärker **a** über den Steuersignaleingang **d** das pneumatische Steuersignal **P_{S},** durch das die zweite Membranwand **o** nach unten entgegen der Federvorspannung verschoben wird, wobei durch eine starre Kopplung der ersten Membranwand **l** an der zweiten Membranwand **o** das Abluftventilglied **n** in Kontakt mit dem Ventilsitz gebracht wird, um eine Entlüftungsöffnung **t** zu schließen. Zudem wird das Zuluftventilglied **k** aufgrund der strukturellen Kopplung des Abluftventilglieds **m** mit dem Zuluftventilglied **k** nach unten verschoben, wodurch der Ventilsitz der Öffnung **i** freigegeben wird und eine Versorgungsströmung durch die Öffnung **i** hindurch in die Arbeitkammer **f** zugelassen wird. Auf diese Weise kann eine Steuerströmung **mₚ** hin zu einem pneumatischen Stellantrieb (nicht dargestellt) abgegeben werden.

Beim Entlüften (Fig. B) des pneumatischen Verstärkers **a** liegt kein Steuerdruck **P_{S}** in der Steuerkammer **h** vor, wodurch die federvorgespannte zweite Membranwand **o** nach oben verschoben ist, was den Ventilsitz der Entlüftungsöffnung **t** freigibt und sich gleichzeitig das federvorgespannte Zuluftventilglied **k** hin zum Ventilsitz der Öffnung i verschiebt. Auf diese Weise ist eine Entlüftungsströmung **m**ₑₙₜₗ durch den pneumatischen Verstärker **a** hin zum Entlüftungsausgang c möglich.

Bei dem bekannten pneumatischen Verstärker ist es von Nachteil, daß er einen ziemlich komplexen Aufbau und somit zu dessen Herstellung hohe Fertigungskosten fordert. Besonders schwierig ist es, die Umschaltfunktion von der Belüftung zur Entlüftung und umgekehrt durch die Dimensionierung und Auslegung der Mechanikkomponenten auszulegen. Dabei kommt es darauf an, einen definierten Betriebswechsel beim Umschalten des pneumatischen Verstärkers insbesondere mit Hilfe des Justierstifts zu schaffen.

Üblicherweise wird der pneumatische Verstärker für ein pneumatisches Stellungssystem zum Stellen eines Stellventils einer verfahrenstechnischen Anlage verwendet, was beispielsweise aus EP 0 884 667 A1 bekannt ist. Danach besteht der pneumatische Verstärker aus zwei parallel geschalteten Belüftungs- und Entlüftungsventilen, die jeweils mit einer Vorsteuereinheit, nämlich einem elektropneumatischen Umformer, verbunden sind.

Die Entlüftungseinheit ist zur "negativen" Verstärkung, nämlich zum Entlüften, das Belüftungsventil zum "positiven" Verstärken des pneumatischen Steuersignals ausgelegt. Das Entlüftungssteuersignal bzw. verstärkte Steuersignal ist an einen pneumatischen Stellantrieb weiterzuleiten. Diese paarweise Anordnung von zwei eigenständigen Vorsteuereinheiten mit getrennter Ansteuerung und jeweils einem nachgeordneten Belüftungs-/Entlüftungsventil ist aufwendig und kostenintensiv, wobei die hohe Teilanzahl zu einer ungünstig hohen Ausfallwahrscheinlichkeit des Systems führt, das einsatzgemäß hohe Sicherheitsstandards zu erfüllen hat.

DE 42 40 802 C2 offenbart einen elektropneumatischen Umformer, an dem ein pneumatischer Verstärker angeschlossen ist, der aus einem Zuluftventil und einem Abluftventil besteht. Beide Ventile werden mit dem pneumatischen Vorsteuersignal beaufschlagt.

Die Ventile bestehen jeweils aus einer Doppelmembrananordnung mit verschiedenen Stößeln zwischen den beiden Membranen und von der zweiten Membran zum Ventil. Die Wirkflächen beider Membranen sind dabei deutlich unterschiedlich groß, so dass der Ausgangsdruck möglichst wenig auf die Steuermembran zurückwirkt. Ein sich zwischen den Membranen aufbauender Druck würde allein aufgrund seines Einflusses bei Temperaturänderungen als Störgröße wirken. Gemäß üblicher Ausführung ist zur Vermeidung dieser Störgröße die zwischen den Membranen liegende Kammer zur Atmosphäre entlüftet. Der mechanische Aufbau dieser Verstärkeranordnung ist jedoch sehr komplex, die Montage kompliziert und deswegen insgesamt auch teuer.

Aufgabe der Erfindung ist es, die Nachteile des Stands der Technik zu überwinden, insbesondere einen pneumatischen Verstärker dahingehend zu verbessern, daß bei Gewährleistung eines einfachen, konstruktiven Aufbaus eine definierte Umschaltfunktion zwischen Be- und Entlüftung des pneumatischen Verstärkers sichergestellt ist.

Diese Aufgabe wird durch die Merkmale von Anspruch 1 gelöst. Danach hat der pneumatische Verstärker ein Zuluftventil mit einem an die pneumatische Versorgung anschließbaren Versorgungseingang, einem Signaleingang zum Empfangen des pneumatischen Eingangssignals, einen Signalausgang zur Abgabe eines verstärkten pneumatischen Ausgangssignals, ein Ventilglied zum insbesondere kontinuierlichen Öffnen und/oder Unterbrechen der pneumatischen Verbindung zwischen pneumatischer Versorgung und dem Signalausgang und eine mit dem Ventilglied gekoppelte Membran, die eine mit pneumatischen Eingangssignal beaufschlagte Außenseite und eine dem Signaleingang abgewandte Außenseite definiert, sowie ein Abluftventil mit einem Entlüftungsausgang zum Entlüften des pneumatischen Verstärkers und einem Ventilglied zum kontinuierlichen Öffnen und/oder Unterbrechen einer pneumatischen Verbindung zwischen dem Signalausgang des Zuluftventils und dem Entlüftungsausgang, wobei die Ventilglieder des Zuluftventils und des Abluftventils baulich voneinander getrennt sind. Erfindungsgemäß ist die dem Signaleingang abgewandte Außenseite der Membran des Zuluftventils von dem verstärkten pneumatischen Ausgangssignal beaufschlagt.

Mit der erfindungsgemäßen Änderung der üblichen Zuluftventilkonstruktion, gemäß der die dem pneumatischen Ausgang zugewandte Seite der Membran Atmosphärendruck ausgesetzt ist, nämlich die dem pneumatischen Ausgang des Verstärkers zugewandte Außenseite mit dem verstärkten Ausgangssignal zu beaufschlagen, zeigte sich überraschenderweise, daß eine eindeutig definierte Umschaltfunktion bereitgestellt werden kann, ohne entsprechende Justiereinrichtungen in dem pneumatischen Verstärker vorzusehen.

Bei Versuchen zeigte sich überraschenderweise auch, daß die pneumatische Rückwirkung des verstärkten pneumatischen Ausgangssignals, also des Ausgangsdrucks des pneumatischen Verstärkers, auf die Stellmembran keine Störgröße für den Verstärkungsvorgang darstellt, sondern vielmehr damit gerade ermöglicht wird, daß dem pneumatischen Verstärker ein Selbstregelungseffekt verliehen wird, ohne daß zusätzlich eine elektrische Hilfsenergie benötigt wird. Es zeigte sich, daß der Verstärker bis zum Maximalwert des Vorsteuersignals einsetzbar ist und somit nahezu den vollen pneumatischen Versorgungsdruck nutzen kann. Aufgrund eines durch die erfindungsgemäße Maßnahme zulässigen einfachen Aufbaus ist auch eine einfache und schnelle Montage des pneumatischen Verstärkers möglich, ohne aufwendige Justier- oder Kalibrierkonstruktionen installieren zu müssen.

GB 1 256 384 offenbart einen pneumatischen Verstärker mit einer Membran, die auf einer Seite mit einem Steuerdruck und auf der anderen Seite mit einem Verstärkungsdruck beaufschlagt ist. Zuluft- und Abluftventilglieder des Verstärkers sind starr aneinander gekoppelt.

GB 2 064 168 offenbart einen pneumatischen Verstärker mit einer Membran, die auf einer Seite mit einem Mischsteuersignal aus Steuersignal und Abluft und auf der anderen Seite mit dem Verstärkungssignal beaufschlagt ist. Eine der Öffnung des Entlüftungsausgangs entgegenwirkende Kraft kann zur Regelung des Ausgangsdrucks herangezogen werden.

DE 195 06 469 C1 offenbart einen doppeltwirkenden elektropneumatischen Stellungsregler für einen Membran- oder Kolbenantrieb, welcher einen I/P-Wandler mit einem pneumatischen Verstärker und einen nachgeschalteten Druckinverter umfasst. Eine Seite des Membran- oder Kolbenantriebs ist mit dem geregelten verstärkten Druck beaufschlagt, wobei die Gegenseite des Antriebs mit einem invertierten geregelten Signal beaufschlagt wird, was eine genauere Regelung des Antriebs ermöglichen soll.

EP 0 503 894 A1 offenbart einen I/P-Wandler mit Doppelmembranstruktur, die auf einer Seite mit einem Verstärkungsdruck und auf der anderen Seite mit einem Mischsignal aus dem über ein Reedventil hergestellten Steuerdruck und der Abluft beaufschlagt ist.

US6,418,956 B1 offenbart einen Druckregler zur Regelung eines Prozessfluids. Bei diesem Druckregler wird das Steuersignal des Reglers von einem zweiten Druckregler eingestellt. Der Prozessfluiddruck wird als Rückkopplungssignal zur Einstellung des Steuerdrucks zurückgeführt.

Bei einer bevorzugten Ausführung der Erfindung ist der Signalausgang des Zuluftventils mit der dem Signaleingang abgewandten Außenseite der Membran pneumatisch verbunden.

Vorzugsweise weist das Abluftventil einen mit dem Signalausgang des Zulaufventils pneumatisch verbundenen Eingang zum Empfangen des verstärkten pneumatischen Ausgangssignals auf.

Bei einer Weiterbildung der Erfindung hat das Abluftventil einen Eingang zum Empfangen des pneumatischen Eingangssignals. Dabei können der Eingang des Abluftventils an dem das verstärkte pneumatische Ausgangssignal anliegt und der Entlüftungsausgang des Abluftventils durch eine Membran von einem Abluftventileingang zum Empfangen des pneumatischen Eingangssignals pneumatisch getrennt sein.

Vorzugsweise hat das Abluftventil ein Ventilglied zum insbesonere kontinuierlichen Öffnen und/oder Unterbrechen einer pneumatischen Verbindung zwischen dessen Eingang, an dem das verstärkte pneumatische Ausgangssignal von dem Zuluftventil anliegt, und dessen Entlüftungsausgang. Vorzugsweise ist der Entlüftungsausgang mit Atmosphäre verbunden oder liegt bei 0 bar.

Bei einer bevorzugten Ausführung der Erfindung sind das Zuluftventil und das Abluftventil in einer Baueinheit realisiert, wodurch die Montage vereinfacht ist. Dabei bleiben die jeweiligen Ventilglieder unabhängig voneinander stellbar und sind unabhängig voneinander gelagert. Dabei kann der Verstärker ein zusammenhängendes Gehäuse aufweisen, daß eine Rückkopplungsleitung zwischen dem Innenausgang des Zuluftventils und Inneneingang des Abluftventils zum Übertragen des verstärkten pneumatischen Ausgangssignals von dem Zuluftventil vorsieht.

Vorzugsweise wird das verstärkte pneumatische Ausgangssignal an einen pneumatischen Antrieb insbesondere zum Stellen eines Stellventils einer verfahrenstechnischen Anlage übertragen.

Bei einer bevorzugten Ausführung der Erfindung hat das Zuluftventil eine geschlossene Sicherheitsstellung, während das Abluftventil eine geöffnete Sicherheitsstellung aufweist. In der Sicherheitsstellung ist gewährleistet, dass das von dem pneumatischen Verstärker zu betätigende Stellglied der Stellarmatur in dessen vorbestimmte Sicherheitsposition verfährt.

Des weiteren betrifft die Erfindung eine Anordnung zum Stellen einer Stellarmatur, wie eines Stellventils, einer verfahrenstechnischen Anlage. Die Anordnung umfaßt eine Einrichtung zum Erzeugen eines pneumatischen Steuerungssignals, wie einen elektropneumatischen Umformer, einen pneumatischen Stellantrieb, der betriebsmäßig mit der Stellarmatur gekoppelt ist, und einen das Steuersignal eines pneumatischen Eingangssignal empfangenden, oben beschriebenen pneumatischen Verstärker zum Übertragen des verstärkten pneumatischen Ausgangssignals an den Stellantrieb.

Vorzugsweise ist die Einrichtung mit einem Stellungsregler verbunden.

Weitere Eigenschaften, Vorteile und Merkmale der Erfindung werden durch die folgende Beschreibung einer bevorzugten Ausführung anhand der beiliegenden Zeichnungen deutlich in denen zeigen:
- Figur 1: eine Prinzipskizze, in der voneinander getrennte Ventile einer erfindungsge- mäßen Ausführung eines pneumatischen Verstärkers in einer Querschnittsan- sicht dargestellt sind;
- Figur 2: eine Prinzipskizze, bei der der in einer Baueinheit realisierte pneumatische Verstärker in einer weiteren bevorzugten Ausführung in einem Querschnitt dargestellt ist; und
- Figur 3: eine Prinzipskizze einer erfindungsgemäßen Anordnung zum Stellen einer Stellarmatur.

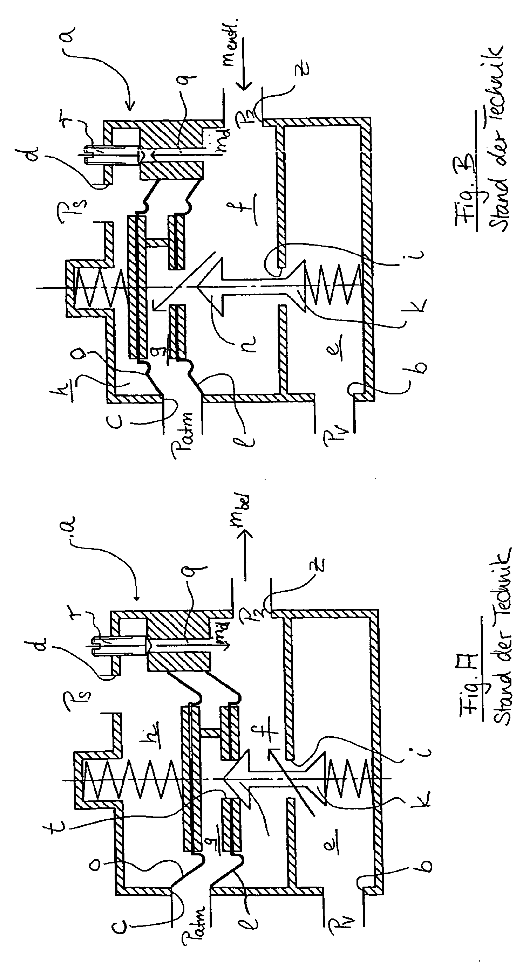

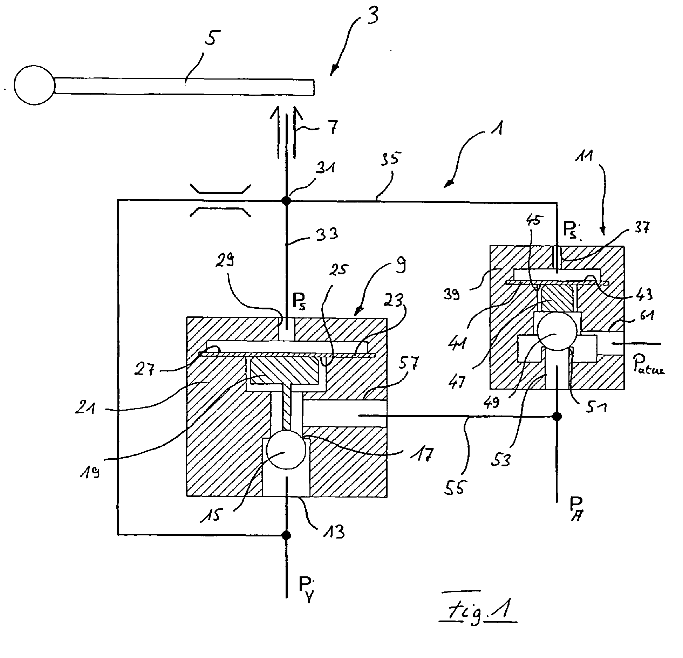

In Figur 1 ist eine Ausführung eines pneumatischen Verstärkers schematisch dargestellt und im allgemeinen mit der Bezugsziffer 1 versehen. Dem pneumatischen Verstärker 1 ist eine Vorsteuereinheit 3 vorgeschaltet, die in der in Figur 1 gezeigten Ausführung durch eine Düsen-Prallplatten-Anordnung realisiert ist. Durch Stellen der Prallplatte 5 relativ zur Düse 7 kann ein Steuerdruck P_{S} eingestellt werden, der an den pneumatischen Verstärker 1 abgegeben wird. Der pneumatische Verstärker 1 besteht aus einem Zuluftventil 9 und einem Abluftventil 11, wobei das Zuluftventil 9 und das Abluftventil 11 in der in Figur 1 dargestellten Ausführung durch voneinander strukturell getrennte Baueinheiten gebildet sind, die über pneumatische die jeweiligen Ventilgehäuse miteinander verbindenden Leitungen aneinander betriebsgemäß angeschlossen sind.

Der pneumatische Verstärker 1 ist an eine pneumatische Versorgung (nicht dargestellt) angeschlossen, die einen Versorgungsdruck P_{V} von beispielsweise 6 bar dem Zuluftventil 9 über diesen Versorgungseingang 13 zuführt. Stromabwärts des Versorgungseingangs 13 ist ein Zuluftventilglied 15 angeordnet, das einem stromabwärtigen Ventilsitz 17 zugeordnet ist.

Das Zuluftventilglied 15 ist über einen T-förmigen Stößel 19 mit einer im Gehäuse 21 des Zuluftventils 9 befestigten Membran 23 gekoppelt. Die Membran 23 hat eine dem Stößel 19 zugewandte Außenseite 25, die größtenteils von dem Stößel 19 bedeckt ist und in einem schmalen Ringbereich freiliegt. Die dem Stößel 19 abgewandte Außenseite 27 der Membran 23 liegt vollständig frei, so daß der Steuerdruck die Membran gegen das Gehäuse zusätzlich abdichtet.

Die Außenseite 27 der Membran 23 ist einem pneumatischen Signaleingang 29 des Zuluftventils zugeordnet, der das pneumatische Vorsteuersignal **P_{S}** der Vorsteuereinheit 3 empfängt, so daß an der freien Außenseite 27 der Membran 23 der Vorsteuersignaldruck von **P_{S}** anliegt.

An einer Weiche 31 wird das pneumatische Vorsteuersignal **P_{S}** in zwei Leitungen 33, 35 weitergeleitet. Über die Leitung 35 gelangt das pneumatische Vorsteuersignal **P_{S}** in einen Eingang 37 des Abluftventils 11. In dem von dem Gehäuse 21 des Zuluftventils 9 strukturell getrennten Gehäuse 39 des Abluftventils 11 ist ebenfalls eine Membran 41 angeordnet. Die dem Eingang 37 zugeordnete Außenseite 43 der Membran 41 ist mit dem pneumatischen Vorsteuersignal P_{S} beaufschlagt. Die Membran 41 hat eine dem Eingang 37 abgewandte Außenseite 45, an dem ein stabförmiger Stößel 47 befestigt ist, der mit einem Abluftventilglied 49 in Wirkverbindung steht.

Die dem Eingang 37 abgewandte Außenseite 45 ist größtenteils von dem Stößel belegt und liegt nur in einem schmalen Ringbereich frei. Die freie Außenseite 43, die dem Eingang 37 zugewandt ist, ist erheblich größer als die dem Eingang abgewandte Außenseite 45 der Membran 41.

Das Abluftventilglied 49 ist einem Ventilsitz 51 zugeordnet. Ein Eingang 53 des Abluftventils 11 ist über eine Verbindungsleitung 55 mit einem Signalausgang 57 des Zuluftventils 9 verbunden, über den das Zuluftventil 9 das mittels der Versorgungspneumatik **P_{V}** verstärkte Vorsteuersignal **P_{S}** an einen beispielsweise pneumatischen Stellantrieb (nicht dargestellt) abgegeben werden kann. Das verstärkte pneumatische Ausgangssignal ist durch **P_{A}** angedeutet. Das Abluftventilglied 49 kann eine Verbindung zwischen dem Steuereingang 53 und einem Entlüftungsausgang 61 kontinuierlich öffnen und/oder unterbrechen, der auf Atmosphärendruck **Pₐₜₘ** liegt.

Wie in Figur 1 ersichtlich ist, besteht eine direkte pneumatische Verbindung zwischen dem Signalausgang 57 des Zuluftventils 9 und der dem Stößel i9 zugewandten Außenseite 25 der Membran 23. Die Wirkflächen können durch Auslegung der Membrangröße, bzw. des freien Querschnitts und des Stößels an die gewünschten Einstellkräfte zum Bewegen der Ventilstellglieder angepasst werden.

In Figur 1 ist eine Betriebssituation dargestellt, in der der Druck des pneumatischen Vorsteuersignals **P_{S}** im wesentlichen Null ist. Steigt nun der Druck des pneumatischen Vorsteuersignals **P_{S}** an, so gibt das Zuluftventilglied 15 den Ventilsitz 17 frei, so daß eine Versorgungsströmung an dem Ventilsitz 17 vorbei hin zum Signalausgang 57 und somit zum nicht dargestellten pneumatischen Antrieb strömen kann. Aufgrund der pneumatischen Verbindung zur Membran 23 wirkt der Druck des pneumatischen Ausgangssignals **P_{S}** auch an der Außenseite 25 der Membran 23, wo sich ein Kräftegleichgewicht an den Außenseiten 25, 27 der Membran 23 aufgrund des unterschiedlichen Flächenverhältnisses einstellen kann. Auf diese Weise ist eine stabile selbst-regelnde Positionierung des Zuluftventilglieds 15 möglich. Die Erfindung überwindet das Vorurteil, die den Vorsteuerdruck abgewandte Außenseite der Stellmembran stets auf Atmosphäre legen zu müssen. Es zeigte sich, daß ein kugelförmiges Zuluftventilglied besonders geeignet ist.

Steigt nun der verstärkte Ausgangsdruck **P**_{A} zu stark an, beispielsweise im Fall einer Undichtigkeit des Zuluftventilglieds 15 am Ventilsitz 17, so öffnet das Abluftventil 11, indem das Abluftventilglied 49 aufgrund des zu starken Ausgangsdrucks **P**_{A} vom Ventilsitz 51 weggedrückt wird, und zwar entgegen dem Druck des an der Membran 41 wirkenden pneumatischen Vorsteuersignals **P_{S}**. Mit der Öffnung des Abluftventilglieds 49 wird der Überdruck über den Entlüftungsausgang 61 abgebaut.

Das Abluftventils 11 kann sowohl als Überströmventil mit einer Regelcharakteristik oder einfach nur als AUF-/ ZU-Ventil ausgeführt sein. Das Abluftventil 11 hat eine Kennlinie, die unter anderem durch die Freiflächen der Außenseiten 43, 53 der Membran 41 definiert wird, wobei beim Überschreiten eines bestimmten Differenzdrucks zwischen **P_{A}** und **P**_{S} der pneumatische Verstärker 1 entlüftet wird.

Durch sorgfältiges Auslegen der freien Membranwirkflächen und der Anordnung aus Ventilsitz und Ventilglied des Zu- und Abluftventils 9, 11 kann ein stabiles, selbstregelndes pneumatisches Verstärkungssystem realisiert werden.

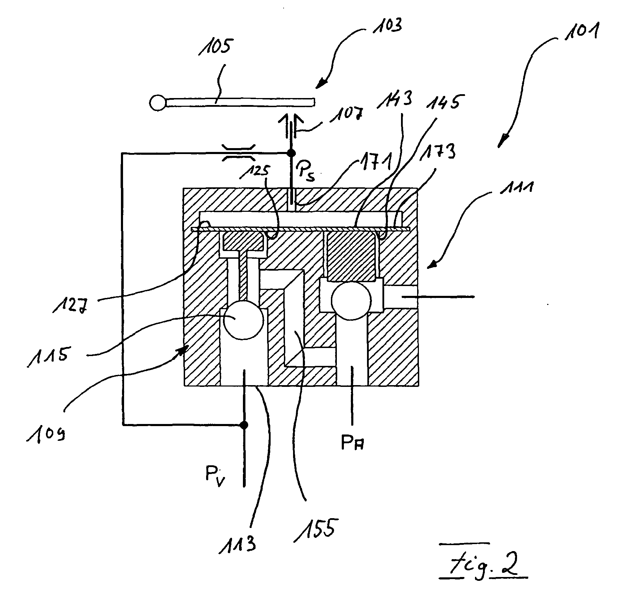

In Figur 2 ist eine weitere, erfindungsgemäße Ausführung eines pneumatischen Verstärkers dargestellt, wobei zur besseren Lesbarkeit der Figurenbeschreibung für gleiche und/oder identische Bauteile wie bei der Ausführung der Figur 1 die gleichen Bezugsziffern verwendet werden, die um 100 erhöht sind.

Das pneumatische Vorsteuersignal **P_{S}** liegt über einem gemeinsamen, in einem Gehäuse eingebrachten Eingang 171 für das Abluftventil 111 und das Zuluftventil 109 an. Das Abluftventil 11 und das Zuluftventil 109 sind durch eine gemeinsame Baueinheit mit einem gemeinsamen Gehäuse gebildet und teilen sich eine gemeinsame Membranstruktur 173. Die gemeinsame Membranstruktur 173 ist so ausgelegt, daß die jeweilige Membranfunktion für das Zuluftventil 109 nicht die Membranfunktion für das Abluftventil 111 beeinflußt. Der Stößelaufbau beider Ventile gemäß der Ausführung nach Figur 2 ist der Ausführung gemäß Figur 1 sehr ähnlich, weswegen es keiner erneuten Beschreibung bedarf.

Die Verbindungsleitung 155 ist bei der Ausführung gemäß Figur 2 durch die gemeinsame Baustruktur des Gehäuses der pneumatischen Verstärkers 101 begrenzt.

Die Funktionsweise des pneumatischen Verstärkers gemäß Figur 2 entspricht dem gemäß Figur 1.

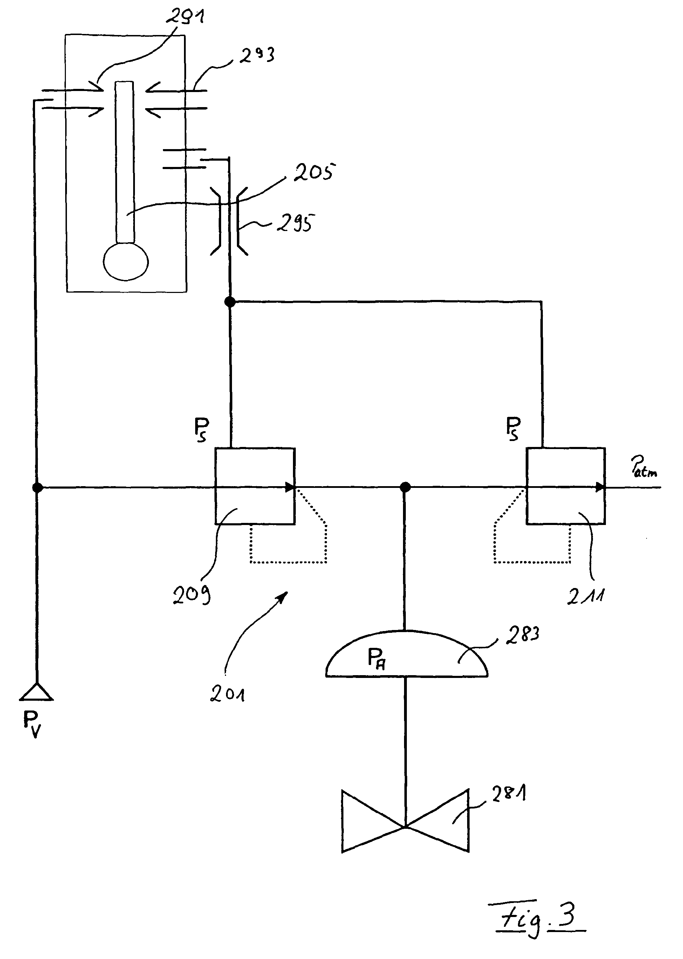

In Figur 3 ist ein pneumatischer Verstärker gemäß den Figuren 1 und 2 schematisch dargestellt, wobei eine unterschiedliche Vorsteuerstufe genutzt ist. Zur einfachen Lesbarkeit der Figurenbeschreibung werden für die identischen und ähnlichen Bezugszeichen zu den Ausführungen gemäß Figuren 1 und 2 die gleichen Bezugsziffern verwendet, die entweder um 100 oder 200 erhöht sind.

Die Figur 3 zeigt den Gesamtaufbau einer Anordnung zum Stellen einer Stellarmatur 281, die von einem pneumatischen Stellantrieb 283 gestellt wird. Der pneumatischen Stellantrieb 283 empfängt ein verstärktes pneumatisches Steuersignal **P_{A}** von dem pneumatischen Verstärker 201. Der pneumatische Verstärker 201 hat den Aufbau eines Abluftventils 211 und eine Zuluftventils 209, so wie es in den Figuren 1 und 2 dargestellt ist.

Die Vorsteuerstufe zum Erzeugen eines pneumatischen Steuersignals **P_{S},** das dem pneumatischen Verstärker 201 zuzuführen ist, hat ein gekapselte Kippelement in Form einer schwenkbaren Prallplatte 205, die zwei Düsen zugeordnet ist, nämlich einer Versorgungspneumatikdüse 291 und einer Entlüftungsdüse 293. Beispielsweise mit Hilfe einer Frequenzsteuerung kann ein modulierter Druck erzeugt werden, der über eine Drossel 295 in einen stabilen Druck für das pneumatische Steuersignal **P_{S}** gewandelt wird, das dem Volumen vor dem pneumatischen Verstärker 201 zugeführt ist.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1, 101, 201: pneumatischer Verstärker
- 3: Vorsteuereinheit
- 5, 205: Prallplatte
- 7: Düse
- 9, 109, 209: Zuluftventil
- 11, 111: Abluftventil
- 13, 113: Versorgungseingang
- 15, 115: Zuluftventilglied
- 17, 117: Ventilsitz
- 19, 119: T-förmiger Stößel
- 21: Gehäuse
- 23: Membran
- 25, 125: zugewandte Außenseite
- 27, 127: abgewandte Außenseite
- 29: pneumatischer Signaleingang
- 31: Weiche
- 33, 35: Leitungen
- 37: Eingang
- 39: Gehäuse
- 41: Membran
- 43, 143: zugeordnete Außenseite
- 45, 145: abgewandte Außenseite
- 47, 147: stabförmiger Stößel
- 49, 149: Abluftventilglied
- 51, 151: Ventilsitz
- 53, 153: Steuereingang
- 55, 155: Verbindungsleitung
- 57, 157: Signalausgang
- 61, 161: Entlüftungsausgang
- 171: gemeinsamer Eingang
- 173: Membranstruktur
- 281: Stellarmatur
- 283: pneumatischer Stellantrieb
- 291: Versorgungspneumatikdüse
- 293: Entlüftungsdüse
- 295: Drossel
- a: Verstärker
- b: Versorgungseingang
- c: Entlüftungsausgang
- d: Steuersignaleingang
- e: Versorgungskammer
- f: Arbeitskammer
- g: Entlüftungskammer
- h: Steuerkammer
- i: Öffnung
- k: kegelförmiges Zuluftventilglied
- l, o: bewegliche Membranwand
- m_{d}: Beipaßströmung
- mₑₙₜₗ: Entlüftungsströmung
- mₚ: Steuerströmung
- n: Abluftventilglied
- q: Bypass-Leitung
- r: Drosselstift
- t: Entlüftungsöffnung
- z: Steuersignalausgang
- P_{A}: verstärktes pneumatisches Steuersignal
- Pₐₜₘ: Atmosphärendruck
- P_{S}: pneumatisches Eingangssignal/Vorsteuersignal
- Pv: Versorgungsdruck

## Patentansprüche

1. Pneumatischer Verstärker umfassend: ein Zuluftventil (9, 109) mit einem an eine pneumatische Versorgung anschließbaren Versorgungseingang (13, 113), einem Signaleingang (29, 171) zum Empfangen des pneumatischen Eingangsignals (P_{S}), einem Signalausgang (57, 157) zur Abgabe eines verstärkten pneumatischen Ausgangsignals (P_{A}), einem Ventilglied (15, 115) zum insbesondere kontinuierlichen Öffnen und/oder Unterbrechen der pneumatischen Verbindung zwischen der pneumatischen Versorgung und dem Signalausgang und einer mit dem Ventilglied (15, 115) gekoppelten Membran (23, 173), die eine mit dem pneumatischen Eingangssignal (P_{S}) beaufschlagte Außenseite (27, 127) und eine dem Signaleingang abgewandten Außenseite (25, 125) definiert; sowie ein Abluftventil (11, 111) mit einem Entlüftungsausgang (61, 161) zum Entlüften des Verstärkers (1, 101) und einem Ventilglied (49, 149) zum insbesondere kontinuierlichen Öffnen und/oder Unterbrechen einer pneumatischen Verbindung zwischen dem Signalausgang (57, 157) des Zuluftventils (9, 109) und dem Entlüftungsausgang (61, 161), wobei das Abluftventil (11, 111) einen Eingang zum Empfangen des gleichen pneumatischen Eingangssignals (P_{S}) aufweist, das auch an dem Eingang des Zuluftventils anliegt, wobei der Entlüftungsausgang (61, 161) des Abluftventils (11, 111) durch eine Membran (41, 173) von dem Eingang des Abluftventils (11, 111) pneumatisch getrennt ist, wobei die Ventilglieder (15, 115, 49, 149) des Zuluft- und Abluftventils (9, 109, 11, 111) baulich voneinander getrennt sind, wobei die dem Signaleingang (29, 171) abgewandte Außenseite (25, 125) der Membran (23, 173) des Zuluftventils (9, 109) von dem verstärkten pneumatischen Ausgangssignal (P_{A}) beaufschlagt ist,
**dadurch gekennzeichnet, daß** die Membran (41,173) des Abluftventils (11, 111) über den Entlüftungsausgang (61, 161) auf Atmosphärendruck liegt und dass das Abluftventil (11, 111) derart als Überströmventil ausgeführt ist, dass bei Überschreiten eines bestimmten Differenzdrucks zwischen dem pneumatischen Eingangssignal (Ps) und dem verstärkten pneumatischen Ausgangssignal (P_{A}) am Abluftventilglied (49,149) der pneumatische Verstärker (1, 101) über das Öffnen des Abluftventilglieds (49, 149) entlüftet wird.

2. Verstärker nach Anspruch 1, **dadurch gekennzeichnet, daß** der Signalausgang (57, 157) des Zuluftventils (9, 109) mit der dem Signaleingang (29, 171) abgewandten Außenseite (25, 125) der Membran (23, 173) pneumatisch verbunden ist.

3. Verstärker nach Anspruch 1 oder 2, **dadurch gekennzeichnet, daß** das Abluftventil (11, 111) einen mit dem Signalausgang (57, 157) des Zuluftventils (9, 109) pneumatisch verbundenen Eingang aufweist, an dem das verstärkte pneumatische Ausgangssignal (P_{A}) anliegt.

4. Verstärker nach einem der Ansprüche 1 bis 3, **dadurch gekennzeichnet, daß** das Abluftventil (11, 111) ein Ventilglied (15, 115, 49, 149) zum kontinuierlichen Öffnen und/oder Unterbrechen einer pneumatischen Verbindung zwischen dessen Eingang zum Empfangen des verstärkten pneumatischen Ausgangssignals (P_{A}) von dem Zuluftventil (9, 109) und dessen Entlüftungsausgang (61, 161) aufweist.

5. Verstärker nach einem der vorstehenden Ansprüche, **dadurch gekennzeichnet, daß** das Zuluftventil (9, 109) und das Abluftventil (11, 111) in einer Baueinheit realisiert sind, wobei die jeweiligen Ventilglieder (15, 115, 49, 149) unabhängig voneinander gelagert sind.

6. Verstärker nach einem der vorstehenden Ansprüche, **dadurch gekennzeichnet, daß** er ein zusammenhängendes Gehäuse aufweist, das eine Rückkopplungsleitung zwischen dem Ausgang des Zuluftventils (9, 109) und dem Eingang des Abluftventils (11, 111) enthält.

7. Verstärker nach einem der vorstehenden Ansprüche, **dadurch gekennzeichnet, daß** das verstärkte pneumatische Ausgangssignal (P_{A}) einem pneumatischen Antrieb insbesondere zum Stellen eines Stellventils einer verfahrenstechnischen Anlage übertragen ist.

8. Verstärker nach einem der vorstehenden Ansprüche, **dadurch gekennzeichnet, dass** die Membran (23,173) des Zuluftventils (9, 109) und die Membran (49, 73) des Abluftventils (11, 111) derart ausgeführt sind, dass sich die Membranfunktion des Zuluftventils (9, 109) und die Membranfunktion des Abluftventils (11, 111) nicht beeinflussen.

9. Verstärker nach einem der vorstehenden Ansprüche, **dadurch gekennzeichnet, daß** das Zuluftventil eine geschlossene Sicherheitsstellung und das Abluftventil eine geöffnete Sicherheitsstellung aufweisen.

10. Anordnung zum Stellen einer Stellarmatur, wie eines Stellventils, einer verfahrenstechnischen Anlage umfassend eine Einrichtung zum Erzeugen eines pneumatischen Steuersignals, wie einen elektropneumatischen Umformer, einen pneumatischen Stellantrieb, der betriebsgemäß mit der Stellarmatur gekoppelt ist, und einen das Steuersignal als pneumatisches Eingangssignal empfangenen, nach einem der Ansprüche 1 bis 11 ausgebildeten pneumatischen Verstärker zum Übertragen des verstärkten pneumatischen Ausgangssignals (P_{A}) an den Stellantrieb.

11. Anordnung nach Anspruch 10, bei der die Einrichtung mit einem Stellungsregler verbunden ist.

12. Anordnung nach Anspruch 10, bei der die Einrichtung Teil des elektro-pneumatischen Umformers, insbesondere eines I/P-Umformers, ist.

## Claims

1. Pneumatic amplifier comprising: an air supply valve (9, 109) with a supply inlet (13, 113) connectable to a pneumatic supply, a signal inlet (29, 171) for receiving the pneumatic input signal (P_{S}), a signal outlet (57, 157) for releasing an amplified pneumatic output signal (P_{A}), a valve member (15, 115) for in particular continuously opening and/or interrupting the pneumatic connection between the pneumatic supply and the signal outlet and a membrane (23, 173) coupled to the valve member (15, 115), defining an outer surface (27, 127) subjected to the pneumatic input signal (P_{S}) and an outer surface (25, 125) facing away from the signal inlet; as well as an exhaust valve (11, 111) with a venting outlet (61, 161) for venting the amplifier (1, 101) and a valve member (49, 149) for in particular continuously opening and/or interrupting a pneumatic connection between the signal outlet (57, 157) of the air supply valve (9, 109) and the venting outlet (61, 161), wherein the air exhaust valve (11, 111) has an inlet for receiving the same pneumatic input signal (P_{S}) as the one present at the inlet of the air supply valve, wherein the venting outlet (61, 161) of the air exhaust valve (11, 111) is pneumatically separated from the inlet of the air exhaust valve (11, 111) by a membrane (41, 173), wherein the valve members (15, 115, 49, 149) of the air supply and air exhaust valve (9, 109, 11, 111) are structurally separated from each other, wherein the outer surface (25, 125) of the membrane (23, 173) of the air supply valve (9, 109) facing away from the signal inlet (29, 171) is subjected to the amplified pneumatic output signal (P_{A}), **characterised in that** the membrane (41, 173) of the air exhaust valve (11, 111) is exposed to atmospheric pressure above the venting outlet (61, 161) and that the air exhaust valve (11, 111) is designed as an overflow valve such that when a certain differential pressure between the pneumatic input signal (P_{S}) and the amplified pneumatic output signal (P_{A}) is exceeded at the air exhaust valve member (49, 149) the pneumatic amplifier (1, 101) is vented via opening of the air exhaust valve member (49, 149).

2. Amplifier according to claim 1, **characterised in that** the signal outlet (57, 157) of the air supply valve (9, 109) is pneumatically connected to the outer surface (25, 125) of the membrane (23, 173) facing away from the signal inlet (29, 271).

3. Amplifier according to claim 1 or 2, **characterised in that** the air exhaust valve (11, 111) has an inlet pneumatically connected to the signal outlet (57, 157) of the air supply valve (9, 109) and exposed to the amplified pneumatic output signal (P_{A}).

4. Amplifier according to one of the claims 1 to 3, **characterised in that** the air exhaust valve (11, 111) has a valve member (15, 115, 49, 149) for continuously opening and/or interrupting a pneumatic connection between its inlet for receiving the amplified pneumatic output signal (P_{A}) from the air supply valve (9, 109) and its venting outlet (61, 161).

5. Amplifier according to one of the preceding claims, **characterised in that** the air supply valve (9, 109) and the air exhaust valve (11, 111) are realised in one structural unit, wherein the respective valve members (15, 115, 49, 149) are mounted independently from each other.

6. Amplifier according to one of the preceding claims, **characterised in that** it features an integral housing that comprises a feedback line between the outlet of the air supply valve (9, 109) and the inlet of the air exhaust valve (11, 111).

7. Amplifier according to one of the preceding claims, **characterised in that** the amplified pneumatic output signal (P_{A}) is transferred to a pneumatic drive, in particular for positioning of a control valve of a technical processing plant.

8. Amplifier according to one of the preceding claims, **characterised in that** the membrane (23, 173) of the air supply valve (9, 109) and the membrane (49, 73) of the air exhaust valve (11, 111) are designed such that the membrane function of the air supply valve (9, 109) and the membrane function of the air exhaust valve (11, 111) do not affect each other.

9. Amplifier according to one of the preceding claims, **characterised in that** the air supply valve has a closed safety position and the air exhaust valve has an open safety position.

10. Arrangement for positioning a positioning device such as a control valve of a technical processing plant, comprising a means for generating a pneumatic control signal, such as an electro-pneumatic transformer, a pneumatic positioner, operationally coupled to the positioning device, and a pneumatic amplifier according to one of the claims 1 to 9 receiving the control signal as a pneumatic input signal for transmitting the amplified pneumatic output signal (P_{A}) to the positioning drive.

11. Arrangement according to claim 10 in which the means is connected to a positioner.

12. Arrangement according to claim 10, in which the means is part of the electro-pneumatic transformer, in particular of an IP-transformer.

## Revendications

1. Amplificateur pneumatique comprenant : une vanne d'arrivée d'air (9, 109) dotée d'une entrée d'alimentation (13, 113) pouvant être raccordée à une alimentation pneumatique, d'une entrée de signal (29, 171) pour la réception du signal d'entrée pneumatique (Pₛ), d'une sortie de signal (57, 157) pour la délivrance d'un signal de sortie (P_{A}) pneumatique amplifié, d'un élément de vanne (15, 115) pour l'ouverture en particulier continue et/ou l'interruption de la liaison pneumatique entre l'alimentation pneumatique et la sortie de signal et une membrane (23, 173) couplée à l'élément de vanne (15, 115), qui définit un côté extérieur (27, 127) alimenté avec le signal d'entrée (P_{S}) pneumatique et un côté extérieur (25, 125) opposé à l'entrée de signal ; et une vanne d'évacuation d'air (11, 111) dotée d'une sortie de purge (61, 161) pour la purge de l'amplificateur (1, 101) et d'un élément de vanne (49, 149) pour l'ouverture en particulier continue et/ou l'interruption d'une liaison pneumatique entre la sortie de signal (57, 157) de la vanne d'arrivée d'air (9, 109) et la sortie de purge (61, 161), la vanne de sortie d'air (11, 111) présentant une entrée pour la réception du même signal d'entrée (P_{S}) pneumatique, qui s'applique également à l'entrée de la vanne d'arrivée d'air, la sortie de purge (61, 161) de la vanne d'évacuation d'air (11, 111) étant séparée de façon pneumatique par une membrane (41, 173) de l'entrée de la vanne de sortie d'air (11, 111), les éléments de vanne (15, 115, 49, 149) de la vanne d'arrivée d'air et de la vanne de sortie d'air (9, 109, 11, 111) étant séparés les uns des autres au niveau de la construction, le côté extérieur (25, 125), opposé à l'entrée de signal (29, 171), de la membrane (23, 173) de la vanne d'arrivée d'air (9, 109) étant alimenté par le signal de sortie (P_{A}) pneumatique amplifié,
**caractérisé en ce que** la membrane (41, 173) de la vanne de sortie d'air (11, 111) se situe par l'intermédiaire de la sortie de purge (61, 161) au niveau de la pression atmosphérique et **en ce que** la vanne de sortie d'air (11, 111) est réalisée sous forme de vanne de trop-plein de telle sorte que, en cas de dépassement d'une pression différentielle définie entre le signal d'entrée (P_{S}) pneumatique et le signal de sortie (P_{A}) pneumatique amplifié sur l'élément de vanne de sortie d'air (49, 149), l'amplificateur (1, 101) pneumatique est purgé par l'intermédiaire de l'ouverture de l'élément de vanne de sortie d'air (49, 149).

2. Amplificateur selon la revendication 1, **caractérisé en ce que** la sortie de signal (57, 157) de la vanne d'arrivée d'air (9, 109) est reliée de façon pneumatique au côté extérieur (25, 125), opposé à l'entrée de signal (29, 171), de la membrane (23, 173).

3. Amplificateur selon la revendication 1 ou 2,**caractérisé en ce que** la vanne de sortie d'air (11, 111) présente une entrée reliée de façon pneumatique à la sortie de signal (57, 157) de la vanne d'arrivée d'air (9, 109), entrée sur laquelle s'applique le signal de sortie (P_{A}) pneumatique amplifié.

4. Amplificateur selon l'une quelconque des revendications 1 à 3, **caractérisé en ce que** la vanne de sortie d'air (11, 111) présente un élément de vanne (15, 115, 49, 149) pour l'ouverture continue et/ou l'interruption d'une liaison pneumatique entre son entrée pour la réception du signal de sortie (P_{A}) pneumatique amplifié provenant de la vanne d'arrivée d'air (9, 109) et sa sortie de purge (61, 161).

5. Amplificateur selon l'une quelconque des revendications précédentes, **caractérisé en ce que** la vanne d'arrivée d'air (9, 109) et la vanne de sortie d'air (11, 111) sont réalisées dans un module, les éléments de vanne (15, 115, 49, 149) respectifs étant logés indépendamment les uns des autres.

6. Amplificateur selon l'une quelconque des revendications précédentes, **caractérisé en ce qu'**il présente un boîtier cohérent qui contient une conduite de rétroaction entre la sortie de la vanne d'arrivée d'air (9, 109) et l'entrée de la vanne de sortie d'air (11, 111).

7. Amplificateur selon l'une quelconque des revendications précédentes, **caractérisé en ce que** le signal de sortie (P_{A}) pneumatique amplifié est transmis à un entraînement pneumatique en particulier pour le positionnement d'une vanne de réglage d'une installation technologique.

8. Amplificateur selon l'une quelconque des revendications précédentes, **caractérisé en ce que** la membrane (23, 173) de la vanne d'arrivée d'air (9, 109) et la membrane (49, 73) de la vanne de sortie d'air (11, 111) sont reliées de telle sorte que la fonction de membrane de la vanne d'arrivée d'air (9, 109) et la fonction de membrane de la vanne de sortie d'air (11, 111) ne s'influencent pas.

9. Amplificateur selon l'une quelconque des revendications précédentes, **caractérisé en ce que** la vanne d'arrivée d'air présente une position de sécurité fermée et la vanne de sortie d'air une position de sécurité ouverte.

10. Agencement pour le positionnement d'une armature de réglage, par exemple d'une vanne de réglage, d'une installation technologique comprenant un dispositif pour générer un signal de commande pneumatique, comme un convertisseur électropneumatique, un servomoteur pneumatique, qui est couplé au niveau du fonctionnement avec l'armature de réglage, et un amplificateur pneumatique recevant le signal de commande sous forme de signal d'entrée pneumatique et conçu selon l'une quelconque des revendications 1 à 10 pour la transmission du signal de sortie (P_{A}) pneumatique amplifié au servomoteur.

11. Agencement selon la revendication 10, sur lequel le dispositif est relié à un régulateur de position.

12. Agencement selon la revendication 10, sur lequel le dispositif fait partie du convertisseur électropneumatique, en particulier d'un convertisseur I/P.
